# EUROPÄISCHE PATENTSCHRIFT

(11) **EP 2 459 425 B1**
(45) Veröffentlichungstag und Bekanntmachung des Hinweises auf die Patenterteilung: **19.06.2013**
(21) Anmeldenummer: 10732337.0
(22) Anmeldetag: 01.07.2010
(51) Int. Cl.: B60T 11/22

(54) **BAUGRUPPE BESTEHEND AUS EINEM AUSGLEICHSBEHÄLTER UND EINEM HAUPTZYLINDER FÜR EINE HYDRAULISCHE KRAFTFAHRZEUGBREMSANLAGE**
ASSEMBLY MADE OF A COMPENSATING TANK AND A MASTER CYLINDER FOR A HYDRAULIC MOTOR VEHICLE BRAKE SYSTEM
ENSEMBLE CONSTITUÉ D'UN RÉSERVOIR DE COMPENSATION ET D'UN MAÎTRE-CYLINDRE POUR UN SYSTÈME DE FREINAGE HYDRAULIQUE D'UN VÉHICULE À MOTEUR

(30) Priorität: 27.07.2009 DE 102009034626
(43) Veröffentlichungstag der Anmeldung: 06.06.2012
(73) Patentinhaber: Continental Teves AG & Co. oHG, 60488 Frankfurt (DE)
(72) Erfinder: SCHLICHT, Stephan, 64569 Nauheim (DE); TANDLER, Peter, 61476 Kronberg/Ts. (DE); NEUMANN, Hans-Jürgen, 65428 Rüsselsheim (DE)
(86) Internationale Anmeldenummer: PCT/EP2010/059349
(87) Internationale Veröffentlichungsnummer: WO 2011/012398

(56) Entgegenhaltungen:
- EP-A2- 0 994 262
- DE-A1- 19 921 195
- US-A- 2 927 497

## Beschreibung

Die Erfindung betrifft eine Baugruppe bestehend aus einem Ausgleichsbehälter und einem Hauptzylinder für eine hydraulische Kraftfahrzeugbremsanlage, wobei der Ausgleichsbehälter zwei Befestigungsansätze mit jeweils einer Öffnung aufweist, wobei die Öffnungen mit einer Öffnung des Hauptzylinders fluchten und der Ausgleichsbehälter über eine lösbare Verbindung mittels eines Befestigungsstiftes befestigt ist, welcher sich durch die fluchtenden Öffnungen erstreckt.

Eine derartige Baugruppe ist beispielsweise aus der EP 0 994 262 A2 bekannt. Dabei wird ein Bajonettstift, dessen Ende einen Dreiecksanker aufweist, durch die fluchtenden Öffnungen durchgesteckt und anschließend mit einem Werkzeug drehend arretiert. Dabei ist eine Öffnung im Befestigungsansatz als ein Langloch zum Durchstecken des Ankers ausgeführt und hervorstehende Noppen zur Verhinderung einer Lösebewegung am gleichen Befestigungsansatz vorgesehen sind.

Eine weitere gattungsgemäße Baugruppe ist aus DE 10047 325 A1 bekannt. Der hieraus bekannte Befestigungsstift ist als Winkelstift vorgesehen und weist einen Ansatz auf, welcher in mit dem Befestigungsansatz verbundenen Federleisten arretierbar ist. Der Winkelstift ist meist aus nicht rostendem Stahl vorgesehen. Die Demontage aus den Befestigungsansätzen erfolgt unter Zuhilfenahme eines Werkzeuges, was insbesondere hinsichtlich eines immer geringer werdenden Einbauraumes der Baugruppe im Motorraum als nachteilig angesehen wird. Weiter wird die aufwendige Herstellung der Federleisten als nachteilig gesehen. Gleichzeitig besteht die Forderung nach gewichtsoptimierten Fahrzeugkomponenten.

Andere Befestigungsformen des Ausgleichsbehälters sehen vor, den Ausgleichsbehälter mittels Schrauben mit dem Hauptzylinder zu verbinden. Hierzu ist eine aufwendige Gewindeherstellung im Hauptzylinder erforderlich.

Aufgabe der Erfindung ist es, eine dahingehend verbesserte Baugruppe bestehend aus Ausgleichsbehälter und Hauptzylinder bereitzustellen, welche gleichzeitig gewichtsoptimiert ausgebildet ist.

Die Aufgabe wird erfindungsgemäß dadurch gelöst, dass der Befestigungsstift aus Kunststoff vorgesehen ist und entlang der Montagerichtung des Befestigungsstiftes form- oder kraftschlüssig mit wenigstens einer der Öffnungen der Befestigungsansätze zusammenwirkt. Die Baugruppe kann dadurch bei einfacher Herstellung gewichtsoptimiert ausgestaltet und lediglich durch eine axiale Steckbewegung des Befestigungsstiftes ohne Werkzeuge montiert und arretiert bzw. ohne Werkzeuge teilweise demontiert werden.

Zur vereinfachten Positionierung während der Montage weist der Befestigungsstift vorzugsweise an einem ersten Ende einen Kopfflansch zur Anlage an einem der Befestigungsansätze auf. Hierbei ist es besonderes vorteilhaft, wenn der Befestigungsstift und die Befestigungsansätze nach Möglichkeit derart ausgestaltet sind, dass eine Montage von beiden Seiten, d.h. von beiden Befestigungsansätzen erfolgen kann.

Vorzugsweise weist der Befestigungsstift ein oder mehrere Rastelemente auf, welche mit wenigstens einer der Öffnungen formschlüssig zusammenwirkt. Die Rastelemente können vorteilhafterweise einfach bei der Herstellung des Befestigungsstiftes vorgesehen werden. Eine weitere Bearbeitung entfällt in der Regel.

Eine vorteilhafte Ausführungsform der Erfindung sieht vor, dass die Öffnungen der Befestigungsansätze jeweils an einer Innenseite eine Ausnehmung aufweisen, in welche ein oder mehrere Rastnasen des Befestigungsstiftes nach seiner Montage eingreifen.

Eine andere vorteilhafte Ausführungsform sieht vor, dass der Befestigungsstift an seinem zweiten Ende einen oder mehrere federnde Rastarme aufweist, welche nach seiner Montage an einem der Befestigungsansätze verrasten.

Dabei ist es vorteilhaft, wenn die Rastarme derart ausgestaltet sind, dass diese sich bei der Montage sowie bei der Demontage federnd zusammendrücken.

Ferner ist bei einer weiteren vorteilhaften Ausführungsform vorgesehen, dass der Befestigungsstift an seinem zweiten Ende federnde, spiralförmige Rastelemente aufweist.

Um ein Klappern des Befestigungsstiftes in der Öffnung des Hauptzylinders zu verhindern, kann vorzugsweise vorgesehen werden, dass der Befestigungsstift in einem mittleren Abschnitt Mittel zum Verklemmen in der Öffnung des Hauptzylinders aufweist.

Eine vorteilhafte Ausführungsform sieht vor, dass der Befestigungsstift im mittleren Abschnitt bombiert vorgesehen ist und einen axial ausgerichteten Schlitz aufweist.

Eine weitere vorteilhafte Ausführungsform der Erfindung sieht vor, dass der Befestigungsstift im mittleren Abschnitt axial ausgerichtete Vorsprünge aufweist.

Eine einfach kraftschlüssige Verbindung des Befestigungsstiftes mit einem Befestigungsansatz kann erzielt werden, indem der Befestigungsstift an seinem zweiten Ende ein gewinde- oder tannenförmiges Profil aufweist, welches in den Öffnungen der Befestigungsansätze verklemmbar ist.

Alternativ kann der Befestigungsstift gemäß einer vorteilhaften Ausbildung an seinem zweiten Ende ein tannenförmiges Profil aufweisen, welches mit einem komplementären Profil in den Öffnungen der Befestigungsansätze zusammenwirkt.

Vorzugsweise ist der Befestigungsstift aus einem härteren Kunststoff als der Ausgleichsbehälter vorgesehen. Damit kann sichergestellt werden, dass der Befestigungsstift bei seiner Montage bzw. bei seiner möglichen Demontage nicht beschädigt wird.

Eine vorteilhafte Ausführungsform sieht dabei vor, dass der Befestigungsstift aus glasfaserverstärktem Polyamid vorgesehen ist. Jedoch sind auch andere Kunststoffmaterialen im Rahmen der Erfindung einsetzbar.

Die oben stehende Aufgabe wird ferner dadurch gelöst, dass der Befestigungsstift an einem ersten Ende einen Kopfflansch zur Anlage an einem der Befestigungsansätze aufweist und an dem Kopfflansch zwei federnde Vorsprünge vorgesehen sind, welche nach der Montage in Ausnehmungen an einer Außenseite der Befestigungsansätze eingreifen.

Weitere Merkmale, Vorteile und Anwendungsmöglichkeiten der Erfindung gehen aus der nachfolgenden Beschreibung von Ausführungsbeispielen sowie anhand der Zeichnung hervor, welche Ausschnitte von Ausführungsformen zeigt. Dabei zeigt jeweils stark schematisiert und teilweise geschnitten:
- Figur 1: einen Ausschnitt einer erfindungsgemäßen Baugruppe eines ersten Ausführungsbeispiels bestehend aus Ausgleichsbehälter und Hauptzylinder;
- Figur 2: einen Ausschnitt einer erfindungsgemäßen Baugruppe eines zweiten Ausführungsbeispiels bestehend aus Ausgleichsbehälter und Hauptzylinder;
- Figur 3: einen Ausschnitt einer erfindungsgemäßen Baugruppe eines dritten Ausführungsbeispiels bestehend aus Ausgleichsbehälter und Hauptzylinder;
- Figur 4: einen Ausschnitt einer erfindungsgemäßen Baugruppe eines vierten Ausführungsbeispiels bestehend aus Ausgleichsbehälter und Hauptzylinder;
- Figur 5: einen Befestigungsstift einer erfindungsgemäßen Baugruppe eines fünften Ausführungsbeispiels bestehend aus Ausgleichsbehälter und Hauptzylinder;
- Figur 6: der Befestigungsstift gemäß Fig. 5 in einer Vorderansicht;
- Figur 7: einen Ausschnitt einer erfindungsgemäßen Baugruppe eines sechsten Ausführungsbeispiels bestehend aus Ausgleichsbehälter und Hauptzylinder;
- Figur 8: einen Befestigungsstift einer Baugruppe eines weiteren außerhalb der Erfindung Migenden Beispiels bestehend aus Ausgleichsbehälter und Hauptzylinder;
- Figur 9: einen Befestigungsstift einer erfindungsgemäßen Baugruppe eines weiteren Ausführungsbeispiels bestehend aus Ausgleichsbehälter und Hauptzylinder und
- Figur 10: einen Befestigungsstift einer erfindungsgemäßen Baugruppe eines weiteren Ausführungsbeispiels bestehend aus Ausgleichsbehälter und Hauptzylinder.

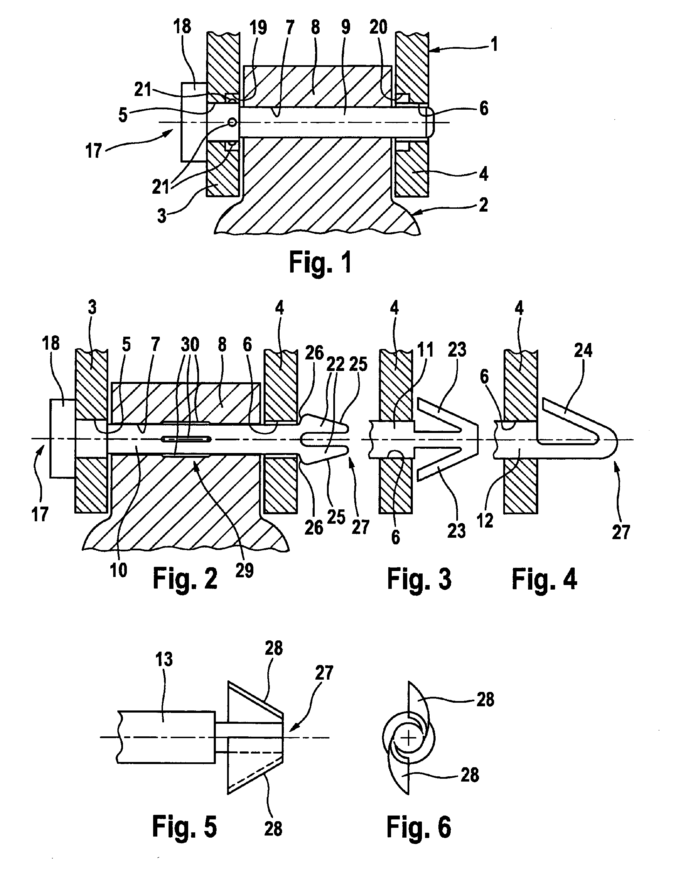

Fig. 1 bis 10 zeigen schematisch Ausführungsbeispiele einer erfindungsgemäßen Baugruppe bestehend aus einem Ausgleichsbehälter 1 und einem Hauptzylinder 2 für eine hydraulische Kraftfahrzeugbremsanlage, deren Aufbau und Funktion grundsätzlich bekannt sind. Nicht gezeigte Anschlussstutzen des Ausgleichsbehälters 1 sind nach dessen Montage auf dem Hauptzylinder 2 in entsprechenden Anschlussöffnungen des Hauptzylinders 2 aufgenommen und verbinden in bekannter Weise Druckmittelkammern des Ausgleichsbehälters 1 mit Druckräumen des Hauptzylinders 2.

Der Ausgleichsbehälter 1 weist zur lösbaren Verbindung mit dem Hauptzylinder 2 zwei Befestigungsansätze 3,4 mit jeweils einer Öffnung 5,6 auf. Diese Öffnungen 5,6 fluchten nach Montage des Ausgleichsbehälters 1 auf dem Hauptzylinder 2 mit einer Öffnung 7 des Hauptzylinders 2. Zur Befestigung ist ein Befestigungsstift 9,10,11,12,13,14,15,16,36 aus Kunststoff vorgesehen, welcher sich durch die fluchtenden Öffnungen 5,6,7 hindurch erstreckt. Die Öffnung 7 des Hauptzylinders 2 ist im Bereich eines Hauptzylinderansatzes 8 als Durchgangsbohrung vorgesehen, welcher sich zwischen nicht dargestellten Behälteranschlüssen des Hauptzylinders 2 erstreckt.

Allen nachfolgend beschriebenen Ausführungsbeispielen ist gemein, dass der Befestigungsstift 9,10,11,12,13,14,15,16,36 aus einem härteren Kunststoff als der Ausgleichsbehälter 1 vorgesehen. Damit kann sichergestellt werden, dass der Befestigungsstift 9 bis 16 bei seiner Montage bzw. bei seiner möglichen Demontage nicht beschädigt wird. Beispielsweise kann der Befestigungsstift 9 bis 16, 36 aus glasfaserverstärktem Polyamid vorgesehen sein, wobei jedoch im Rahmen der Erfindung auch andere Kunststoffmaterialen einsetzbar sind.

Um die Montage des Befestigungsstiftes 9 bis 16 zu vereinfachen und ohne Zuhilfenahme von Werkzeugen zu ermöglichen und eine gewichtsoptimierte Baugruppe erhalten, ist der Befestigungsstift 9 bis 16, 36 des jeweiligen Ausführungsbeispieles aus Kunststoff vorgesehen und wirkt form - oder kraftschlüssig mit wenigstens einer der Öffnungen 5,6 der Befestigungsansätze 3,4 bzw. mit den Befestigungsansätzen 3,4 zusammen.

Zur vereinfachten Positionierung während der Montage weist der Befestigungsstift 9 bis 16, 36 an einem ersten Ende 17, 37 einen Kopfflansch 18, 38 zur Anlage an einem der Befestigungsansätze 3,4 auf. Hierbei ist es besonderes vorteilhaft, wenn der Befestigungsstift 9 bis 16, 36 und die Befestigungsansätze 3,4 nach Möglichkeit derart ausgestaltet sind, dass eine Montage von beiden Seiten, d.h. von beiden Befestigungsansätzen 3,4 erfolgen kann.

Den Fig. 1 bis 6 sind fünf Ausführungsbeispiele zu entnehmen, bei welchen der Befestigungsstift 9 bis 13 ein oder mehrere Rastelemente aufweist, welche mit wenigstens einer der Öffnungen 5,6 der Befestigungsansätze 3,4 formschlüssig zusammenwirkt. Die Rastelemente können einfach bei der Herstellung des Befestigungsstiftes 9 bis 13 vorgesehen werden, wodurch eine zusätzliche Bearbeitung entfallen kann.

Fig. 1 zeigt einen Ausschnitt einer erfindungsgemäßen Baugruppe eines ersten Ausführungsbeispiels. Wie ersichtlich ist, weisen die Öffnungen 5,6 der Befestigungsansätze 3,4 jeweils an einer Innenseite eine Ausnehmung 19,20 auf, so dass die Öffnungen 5,6 gestuft mit einem kleinen auf einer Außenseite und einem großen Durchmesser auf der Innenseite ausgebildet sind. Der Befestigungsstift 9 weist mehrere Rastnasen 21 auf, welche nach dessen Montage in die Ausnehmung 19 eingreifen. Die Rastnasen 21 sind dabei derart bemessen, dass sie sich bei der Montage durch die Öffnung 5 verformen können.

Da beide Befestigungsansätze 3 und 4 jeweils eine gestufte Öffnung 5,6, mit den gleichen Durchmessern aufweisen, ist die Montage von beiden Seiten möglich.

Den Fig. 2 bis 4 sind Ausführungsbeispiele zu entnehmen, deren Befestigungsstifte 10 bis 12 an ihren zweiten Enden 27 einen oder mehrere federnde Rastarme 22 bis 24 aufweisen, welche nach der Montage der Befestigungsstifte 10 bis 12 an dem Befestigungsansatz 3,4 verrasten können.

Fig. 2 zeigt dabei eine zweite Ausführungsform. Der Befestigungsstift 10 weist zwei Rastarme 22 auf, die sich vorteilhafterweise bei der Montage sowie bei der Demontage federnd zusammendrücken. Hierzu sind die Rastarme 22 im Wesentlichen U-förmig angeordnet, wobei die Rastarme 22 jeweils zwei Führungsschrägen 25,26 aufweisen. Wie aus Fig. 2 hervorgeht, dienen die Führungsschrägen 25 dem Zusammendrücken der Rastarme 22 bei der Montage des Befestigungsstiftes 10 und die Führungsschrägen 26 erlauben ein Zusammendrücken bei dessen Demontage.

Die Rastarme 23,24 des dritten und vierten Ausführungsbeispiels sind, wie aus den Fig. 3 und 4 ersichtlich ist, derart dimensioniert, dass der Befestigungsstift 11,12 im Bereich der Rastarme 23,24 keinen größeren Durchmesser aufweist, wenn die Rastarme 23,24 bei der Montage zusammengedrückt sind. Aufgrund der Ausgestaltung der Rastarme 23,24 sind die Befestigungsstifte 11,12 nicht demontierbar.

Fig. 5 und 6 zeigen ein fünftes Ausführungsbeispiel, dessen Befestigungsstift 13 an seinem zweiten Ende 27 federnde, spiralförmige Rastelemente 28 aufweist, wobei ein Durchmesser des Endes 27 kleiner als ein Durchmesser der Öffnung 7 des Hauptzylinders 2 vorgesehen ist, um eine einfache Montage des Befestigungsstiftes 13 zu gewährleisten.

Um ein Klappern der Befestigungsstifte 9 bis 13 der vorstehenden Ausführungsbeispiele in der Öffnung 7 des Hauptzylinders 2 zu verhindern, kann bei diesen vorgesehen werden, dass die Befestigungsstifte 9 bis 13 in einem mittleren Abschnitt 29 Mittel zum Verklemmen in der Öffnung 7 aufweisen. Diese Mittel können beispielsweise axial ausgerichtete Vorsprünge 30 sein, wie in Fig. 2 dargestellt.

Alternativ können die Befestigungsstifte 9 bis 13 im mittleren Abschnitt 29 bombiert, d.h. gewölbt vorgesehen sein. Ein axial ausgerichteter Schlitz ermöglicht in diesem Fall die einfache Montage durch die Öffnung 7 des Hauptzylinders 2.

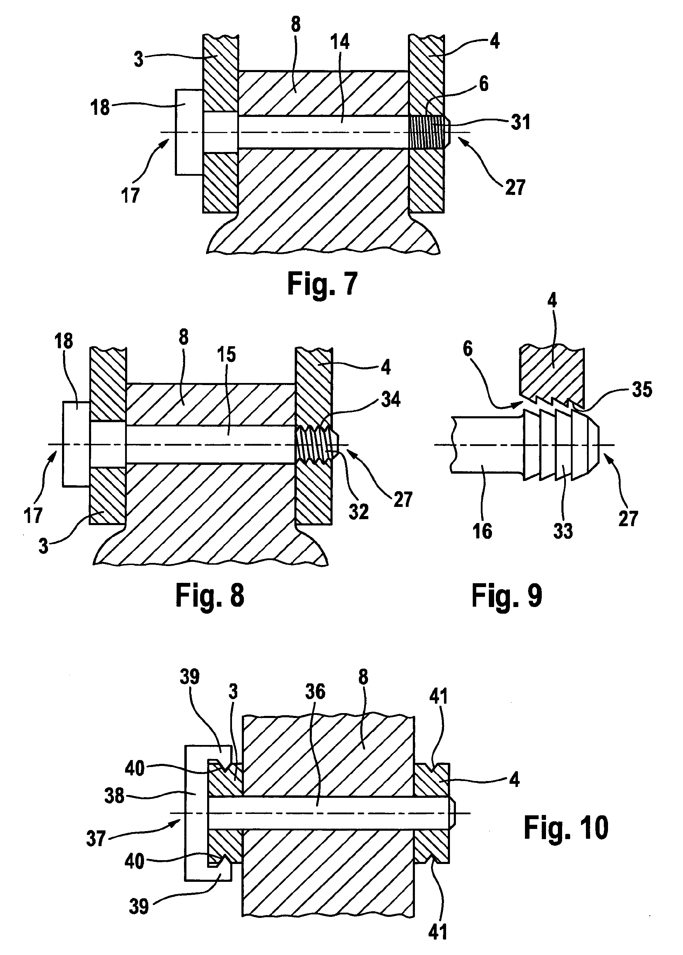

Ein sechstes Ausführungsbeispiel gemäß Fig. 7 sieht eine kraftschlüssige Verbindung des Befestigungsstiftes 14 mit einem Befestigungsansatz 3,4 vor, welche in einfacher Weise erzielt werden kann, indem der Befestigungsstift 14 an seinem zweiten Ende 27 ein gewinde- oder tannenförmiges Profil 31 aufweist, welches in der Öffnung 5,6 verklemmbar ist.

Gemäß Fig. 9, die ein weiteres Ausführungsbeispiel zeigt, kann der Befestigungsstift 15,16 an seinem zweiten Ende 27 ein tannenförmiges Profil 32,33 aufweisen, welches mit einem komplementären Profil 34,35 in der Öffnung 6 des Befestigungsansatzes 4 zusammenwirkt.

Ein Weiteres Ausführungsbeispiel ist in Fig. 10 dargestellt. Der Befestigungsstift 36 weist an einem ersten Ende 37 ebenfalls einen Kopfflansch 38 zur Anlage an einem der Befestigungsansätze 3,4 auf. Im Unterschied zu den vorstehend beschriebenen Ausführungsbeispielen weist jedoch der Kopfflansch 38 zwei federnde Vorsprünge 39 auf, welche nach der Montage in Ausnehmungen 40,41 an einer Außenseite der Befestigungsansätze 3,4 formschlüssig eingreifen. Da die Ausnehmungen 40,41 an beiden Befestigungsvorsätzen 3,4 vorgesehen sind, kann die Montage von beiden Seiten erfolgen.

Eine Montage von beiden Seiten ist vorteilhafterweise möglich, wenn die Öffnungen 5,6 einen gleichen Durchmesser aufweisen. Hierzu weist beispielsweise der in Fig. 2 dargestellte Befestigungsstift 10 im Bereich der Öffnungen 5,6 einen einheitlichen Durchmesser. Eine Abstufung des Befestigungsstiftes 10,11,12,14,15,16 nach dem Kopfflansch 18, wie dargestellt, ist also nicht zwingend notwendig.

**Bezugszeichenliste**

| | |
|---|---|
| 1 | Ausgleichsbehälter |
| 2 | Hauptzylinder |
| 3 | Befestigungsansatz |
| 4 | Befestigungsansatz |
| 5 | Öffnung |
| 6 | Öffnung |
| 7 | Öffnung |
| 8 | Hauptzylinderansatz |
| 9 | Befestigungsstift |
| 10 | Befestigungsstift |
| 11 | Befestigungsstift |
| 12 | Befestigungsstift |
| 13 | Befestigungsstift |
| 14 | Befestigungsstift |
| 15 | Befestigungsstift |
| 16 | Befestigungsstift |
| 17 | Ende |
| 18 | Kopfflansch |
| 19 | Ausnehmung |
| 20 | Ausnehmung |
| 21 | Rastnase |
| 22 | Rastarm |
| 23 | Rastarm |
| 24 | Rastarm |
| 25 | Führungsschräge |
| 26 | Führungsschräge |
| 27 | Ende |
| 28 | Rastelement |
| 29 | Abschnitt |
| 30 | Vorsprung |
| 31 | Profil |
| 32 | Profil |
| 33 | Profil |
| 34 | Profil |
| 35 | Profil |
| 36 | Befestigungsstift |
| 37 | Ende |
| 38 | Kopfflansch |
| 39 | Vorsprung |
| 40 | Ausnehmung |
| 41 | Ausnehmung |

## Patentansprüche

1. Baugruppe bestehend aus einem Ausgleichsbehälter (1) und einem Hauptzylinder (2) für eine hydraulische Kraftfahrzeugbremsanlage, wobei der Ausgleichsbehälter (1) zwei Befestigungsansätze (3,4) mit jeweils einer Öffnung (5,6) aufweist, wobei die Öffnungen (5,6) mit einer Öffnung (7) des Hauptzylinders (2) fluchten und der Ausgleichsbehälter (1) über eine lösbare Verbindung mittels eines Befestigungsstiftes (9;10;11;12;13;14;16;36) befestigt ist, welcher sich durch die fluchtenden Öffnungen (5,6,7) erstreckt, **dadurch gekennzeichnet, dass** der Befestigungsstift (9;10;11;12;13;14;16;36) aus Kunststoff vorgesehen ist, an einem ersten Ende (17,37) einen Kopfflansch (18,38) zur Anlage an einem der Befestigungsansätze (3,4) aufweist und entgegen einer Montagerichtung des Befestigungsstiftes (9;10;11;12;13;14;16;36) form- oder kraftschlüssig mit wenigstens einer der Öffnungen (5,6) der Befestigungsansätze (3,4) zusammenwirkt, wobei die lösbare Verbindung zwangsweise ohne Zuhilfenahme von Werkzeugen und lediglich durch eine axiale Steckbewegung des Befestigungsstiftes (9;10;11;12;13;14;16;36) durch die Öffnungen (5,6,7), arretierbar ist.

2. Baugruppe nach Anspruch 1, **dadurch gekennzeichnet, dass** der Befestigungsstift (9;10;11;12;13) ein oder mehrere Rastelemente (21;22;23;24;28) aufweist, welche mit wenigstens einer der Öffnungen (5,6) formschlüssig zusammenwirkt.

3. Baugruppe nach Anspruch 2, **dadurch gekennzeichnet, dass** die Öffnungen (5,6) der Befestigungsansätze (3,4) jeweils an einer Innenseite eine Ausnehmung (19,20) aufweisen, in welche ein oder mehrere Rastnasen (21) des Befestigungsstiftes (9) nach seiner Montage eingreifen.

4. Baugruppe nach Anspruch 2, **dadurch gekennzeichnet, dass** der Befestigungsstift (10;11;12) an seinem zweiten Ende (27) einen oder mehrere federnde Rastarme (22;23;24) aufweist, welche nach seiner Montage an einem der Befestigungsansätze (3,4) verrasten.

5. Baugruppe nach Anspruch 4, **dadurch gekennzeichnet, dass** die Rastarme (22) derart ausgestaltet sind, dass diese sich bei der Montage sowie bei der Demontage federnd zusammendrücken.

6. Baugruppe nach Anspruch 2, **dadurch gekennzeichnet, dass** der Befestigungsstift (13) an seinem zweiten Ende (27) federnde, spiralförmige Rastelemente (28) aufweist.

7. Baugruppe nach einem der Ansprüche 1 bis 6, **dadurch gekennzeichnet, dass** der Befestigungsstift (9;10;11;12;13) in einem mittleren Abschnitt (29) Mittel zum Verklemmen in der Öffnung (7) des Hauptzylinders (2) aufweist.

8. Baugruppe nach Anspruch 7, **dadurch gekennzeichnet, dass** der Befestigungsstift (9;10;11;12;13) im mittleren Abschnitt (29) bombiert vorgesehen ist und einen axial ausgerichteten Schlitz aufweist.

9. Baugruppe nach Anspruch 7, **dadurch gekennzeichnet, dass** der Befestigungsstift (9;10;11;12;13) im mittleren Abschnitt (29) axial ausgerichtete Vorsprünge (30) aufweist.

10. Baugruppe nach Anspruch 1, **dadurch gekennzeichnet, dass** der Befestigungsstift (14) an seinem zweiten Ende (27) ein gewinde- oder tannenförmiges Profil (31) aufweist, welches in den Öffnungen (5,6) der Befestigungsansätze (3,4) verklemmbar ist.

11. Baugruppe nach Anspruch 1, **dadurch gekennzeichnet, dass** der Befestigungsstift (16) an seinem zweiten Ende (27) ein tannenförmiges Profil (33) aufweist, welches mit einem komplementären Profil (35) in den Öffnungen (5,6) der Befestigungsansätze (3,4) zusammenwirkt.

12. Baugruppe nach einem der vorangehenden Ansprüchen, **dadurch gekennzeichnet, dass** der Befestigungsstift (9;10;11;12;13;14;16;36) aus einem härteren Kunststoff als der Ausgleichsbehälter (1) vorgesehen ist.

13. Baugruppe nach einem der vorangehenden Ansprüchen, **dadurch gekennzeichnet, dass** der Befestigungsstift (9;10;11;12;13;14;16;36) aus glasfaserverstärktem Polyamid vorgesehen ist.

14. Baugruppe nach Anspruch 1, **dadurch gekennzeichnet, dass** an dem Kopfflansch (38) zwei federnde Vorsprünge (39) vorgesehen sind, welche nach der Montage in Ausnehmungen (40,41) an einer Außenseite der Befestigungsansätze (3,4) eingreifen.

## Claims

1. Assembly comprising a compensating reservoir (1) and a master cylinder (2) for a hydraulic motor vehicle brake system, wherein the compensating reservoir (1) has two fastening lugs (3, 4), each with an opening (5, 6), wherein the openings (5, 6) are in alignment with an opening (7) in the master cylinder (2), and the compensating reservoir (1) is fastened by way of a releasable connection by means of a fastening pin (9; 10; 11; 12; 13; 14; 16; 36) which extends through the aligned openings (5, 6, 7), **characterized in that** the fastening pin (9; 10; 11; 12; 13; 14; 16; 36) provided is made of plastic, has a head flange (18, 38) at a first end (17, 37) for the purpose of resting against one of the fastening lugs (3, 4) and, counter to an installation direction of the fastening pin (9; 10; 11; 12; 13; 14; 16; 36), interacts in a form- or force-fitting manner with at least one of the openings (5, 6) in the fastening lugs (3, 4), wherein the releasable connection can be locked positively without the aid of tools and merely by means of an axial plug-in movement of the fastening pin (9; 10; 11; 12; 13; 14; 16; 36) through the openings (5, 6, 7).

2. Assembly according to Claim 1, **characterized in that** the fastening pin (9; 10; 11; 12; 13) has one or more latching elements (21; 22; 23; 24; 28) which interact in a form-fitting manner with at least one of the openings (5, 6).

3. Assembly according to Claim 2, **characterized in that** the openings (5, 6) in the fastening lugs (3, 4) each have a recess (19, 20) on an inner side, into which recess one or more latching noses (21) on the fastening pin (9) engage after the installation thereof.

4. Assembly according to Claim 2, **characterized in that** the fastening pin (10; 11; 12) has, at the second end (27) thereof, one or more resilient latching arms (22; 23; 24) which engage on one of the fastening lugs (3, 4) after its installation.

5. Assembly according to Claim 4, **characterized in that** the latching arms (22) are designed in such a way that they are pressed together resiliently during installation and removal.

6. Assembly according to Claim 2, **characterized in that** the fastening pin (13) has resilient spiral latching elements (28) at its second end (27).

7. Assembly according to one of Claims 1 to 6, **characterized in that** the fastening pin (9; 10; 11; 12; 13) has means for wedging in the opening (7) in the master cylinder (2) in a central section (29).

8. Assembly according to Claim 7, **characterized in that** the fastening pin (9; 10; 11; 12; 13) is provided with a convexity in the central section (29) and has an axially oriented slot.

9. Assembly according to Claim 7, **characterized in that** the fastening pin (9; 10; 11; 12; 13) has axially oriented projections (30) in the central section (29).

10. Assembly according to Claim 1, **characterized in that** the fastening pin (14) has, at the second end (27) thereof, a thread- or fir tree-shaped profile (31) which can be wedged in the openings (5, 6) in the fastening lugs (3, 4).

11. Assembly according to Claim 1, **characterized in that** the fastening pin (16) has, at the second end (27) thereof, a fir tree-shaped profile (33) which interacts with a complementary profile (35) in the openings (5, 6) in the fastening lugs (3, 4).

12. Assembly according to one of the preceding claims, **characterized in that** the fastening pin (9; 10; 11; 12; 13; 14; 16; 36) provided is made from a harder plastic than the compensating reservoir (1).

13. Assembly according to one of the preceding claims, **characterized in that** the fastening pin (9; 10; 11; 12; 13; 14; 16; 36) provided is made from glass-reinforced polyamide.

14. Assembly according to Claim 1, **characterized in that** two resilient projections (39) are provided on the head flange (38), which projections engage in recesses (40, 41) on an outer side of the fastening lugs (3, 4) after installation.

## Revendications

1. Module constitué d'un réservoir de compensation (1) et d'un maître-cylindre (2) pour un système de freinage hydraulique d'un véhicule à moteur, le réservoir de compensation (1) présentant deux inserts de fixation (3, 4) ayant chacun une ouverture (5, 6), les ouvertures (5, 6) étant en alignement avec une ouverture (7) du maître-cylindre (2) et le réservoir de compensation (1) étant fixé par le biais d'une connexion desserrable au moyen d'une goupille de fixation (9 ; 10 ; 11 ; 12 ; 13 ; 14 ; 16 ; 36), laquelle s'étend à travers les ouvertures alignées (5, 6, 7), **caractérisé en ce que** la goupille de fixation (9 ; 10 ; 11 ; 12 ; 13 ; 14 ; 16 ; 36) est fabriquée en plastique, présente une bride de tête (18, 38) à une première extrémité (17, 37) pour l'application sur l'un des inserts de fixation (3, 4), et coopère à l'encontre d'une direction de montage de la goupille de fixation (9 ; 10 ; 11 ; 12 ; 13 ; 14 ; 16 ; 36) par engagement par correspondance de forme ou par force avec au moins l'une des ouvertures (5, 6) des inserts de fixation (3, 4), la connexion desserrable pouvant être bloquée par force sans utiliser d'outils et simplement par un mouvement d'enfichage axial de la goupille de fixation (9 ; 10 ; 11 ; 12 ; 13 ; 14 ; 16 ; 36) à travers les ouvertures (5, 6, 7).

2. Module selon la revendication 1, **caractérisé en ce que** la goupille de fixation (9 ; 10 ; 11 ; 12 ; 13) présente un ou plusieurs éléments d'encliquetage (21 ; 22 ; 23 ; 24 ; 28), qui coopèrent par engagement par correspondance de forme avec au moins l'une des ouvertures (5, 6).

3. Module selon la revendication 2, **caractérisé en ce que** les ouvertures (5, 6) des inserts de fixation (3, 4) présentent à chaque fois, sur un côté intérieur, un évidement (19, 20) dans lequel viennent en prise un ou plusieurs ergots d'encliquetage (21) de la goupille de fixation (9) après son montage.

4. Module selon la revendication 2, **caractérisé en ce que** la goupille de fixation (10 ; 11 ; 12) présente, à sa deuxième extrémité (27), un ou plusieurs bras d'encliquetage élastiques (22 ; 23 ; 24), qui s'encliquètent après son montage sur l'un des inserts de fixation (3, 4).

5. Module selon la revendication 4, **caractérisé en ce que** les bras d'encliquetage (22) sont réalisés de manière à se comprimer élastiquement lors du montage ainsi que lors du démontage.

6. Module selon la revendication 2, **caractérisé en ce que** la goupille de fixation (13) présente, à sa deuxième extrémité (27), des éléments d'encliquetage élastiques (28) de forme hélicoïdale.

7. Module selon l'une quelconque des revendications 1 à 6, **caractérisé en ce que** la goupille de fixation (9 ; 10 ; 11 ; 12 ; 13) présente, dans une portion centrale (29), des moyens de blocage dans l'ouverture (7) du maître-cylindre (2).

8. Module selon la revendication 7, **caractérisé en ce que** la goupille de fixation (9 ; 10 ; 11 ; 12 ; 13) est prévue sous forme bombée dans la portion centrale, et présente une fente orientée axialement.

9. Module selon la revendication 7, **caractérisé en ce que** la goupille de fixation (9 ; 10 ; 11 ; 12 ; 13) présente, dans la portion centrale (29), des saillies orientées axialement (30).

10. Module selon la revendication 1, **caractérisé en ce que** la goupille de fixation (14) présente, à sa deuxième extrémité (27), un profil (31) de forme filetée ou en forme de sapin, qui peut être serré dans les ouvertures (5, 6) des inserts de fixation (3, 4).

11. Module selon la revendication 1, **caractérisé en ce que** la goupille de fixation (16) présente, à sa deuxième extrémité (27), un profil en forme de sapin (33) qui coopère avec un profil complémentaire (35) dans les ouvertures (5, 6) des inserts de fixation (3, 4).

12. Module selon l'une quelconque des revendications précédentes, **caractérisé en ce que** la goupille de fixation (9 ; 10 ; 11 ; 12 ; 13 ; 14 ; 16 ; 36) est fabriquée en un plastique plus dur que celui du réservoir de compensation (1).

13. Module selon l'une quelconque des revendications précédentes, **caractérisé en ce que** la goupille de fixation (9 ; 10 ; 11 ; 12 ; 13 ; 14 ; 16 ; 36) est fabriquée en un polyamide renforcé par des fibres de verre.

14. Module selon la revendication 1, **caractérisé en ce que** deux saillies élastiques (39) sont prévues sur la bride de tête (38), lesquelles viennent en prise après le montage dans des évidements (40, 41) au niveau d'un côté extérieur des inserts de fixation (3, 4).
